(19) Europäisches Patentamt
European Patent Office
Office européen des brevets

(11) **EP 3 317 959 B1**

(12) **EUROPÄISCHE PATENTSCHRIFT**

(45) Veröffentlichungstag und Bekanntmachung des Hinweises auf die Patenterteilung:
**25.09.2019 Patentblatt 2019/39**

(21) Anmeldenummer: **16751245.8**

(22) Anmeldetag: **03.08.2016**

(51) Int Cl.:
*H02M 7/48* <sup>(2007.01)</sup>    *H02M 7/483* <sup>(2007.01)</sup>

(86) Internationale Anmeldenummer:
**PCT/EP2016/068493**

(87) Internationale Veröffentlichungsnummer:
**WO 2017/036712 (09.03.2017 Gazette 2017/10)**

(54) **VERFAHREN ZUR STEUERUNG EINES MODULAREN MULTI-LEVEL-UMRICHTERS, STEUEREINRICHTUNG FÜR EINEN MODULAREN MULTI-LEVEL-UMRICHTER UND MODULARER MULTI-LEVEL-UMRICHTER MIT DER STEUEREINRICHTUNG**

METHOD FOR CONTROLLING A MODULAR MULTI-LEVEL CONVERTER, CONTROL DEVICE FOR A MODULAR MULTI-LEVEL CONVERTER, AND MODULAR MULTI-LEVEL CONVERTER HAVING SAID CONTROL DEVICE

PROCÉDÉ DE COMMANDE D'UN ONDULEUR MULTINIVEAUX MODULAIRE, DISPOSITIF DE COMMANDE POUR UN ONDULEUR MULTINIVEAUX MODULAIRE ET ONDULEUR MULTINIVEAUX MODULAIRE DOTÉ DU DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2015 DE 102015216892**

(43) Veröffentlichungstag der Anmeldung:
**09.05.2018 Patentblatt 2018/19**

(73) Patentinhaber: **Siemens Aktiengesellschaft 80333 München (DE)**

(72) Erfinder:
• **DOMMASCHK, Mike 91096 Möhrendorf-Kleinseebach (DE)**
• **KUBERA, Sascha 91325 Adelsdorf (DE)**
• **Die weiteren Erfinder haben auf ihr Recht verzichtet, als solche bekannt gemacht zu werden.**

(56) Entgegenhaltungen:
**EP-A1- 2 882 089**

• **HASSANPOOR ARMAN ET AL: "Tolerance-band modulation methods for modular multilevel converters", 2013 15TH EUROPEAN CONFERENCE ON POWER ELECTRONICS AND APPLICATIONS (EPE), IEEE, 2. September 2013 (2013-09-02), Seiten 1-10, XP032505087, DOI: 10.1109/EPE.2013.6632010 [gefunden am 2013-10-14] in der Anmeldung erwähnt**

**Beschreibung**

Die Erfindung betrifft ein Verfahren nach dem Oberbegriff des Anspruchs 1, eine Steuereinrichtung nach dem Oberbegriff des Anspruchs 6 und einen Modularen Multi-Level-Umrichter mit der Steuereinrichtung gemäß Anspruch 11. Es werden zunehmend Hochspannungsgleichstromübertragungssysteme (HVDC) eingesetzt, um z.B. Offshore-Windkraftanlagen mit dem Festland zu verbinden, weil solche Systeme vergleichsweise geringe Energieverluste bei der Energieübertragung erzeugen und eine stabilisierende Wirkung für ein eingeschlossenes Energienetz, z.B. durch eine Blindleistungskorrektur, entfalten. Ein Teil der Übertragungsverluste entsteht dabei durch Umrichter, die Gleich- in Wechselspannung (und umgekehrt) umrichten. Besonders geeignet sind so genannte Modulare Multi-Level-Umrichter (M2C), bei denen Halbleiterschalter in einer Vielzahl von Modulen mit Kondensatoren so gesteuert werden, dass eine geeignete Ausgangsspannung erzeugt wird. Jeder Schaltvorgang eines Halbleiterschalters erzeugt jedoch Energieverluste, so dass die Energieeffizienz eines Modularen Multi-Level-Umrichters umso geringer ist, je höher die Schaltfrequenz des Umrichters ist. Derzeit werden häufig Schaltfrequenzen im Bereich zwischen 150 bis 200 Hz eingesetzt.

Die Energieverluste durch Schaltvorgänge spielen eine wichtige Rolle bei der Bewertung der Kosten von HVDC-Anlagen, weil sie bis zu ca. 1/3 aller Energieverluste durch den Umrichter ausmachen. Typischerweise betragen die Energieverluste eines modernen Modularen Multi-Level-Umrichters ca. 0,3 % bis 0,5 % der gesamten übertragenen Energie.

Modulare Multi-Level-Umrichter werden nicht nur bei HVDC-Anlagen eingesetzt, sondern z.B. auch bei flexiblen Drehstromübertragungssystemen (FACTS), insbesondere bei so genannten "Static Synchronous Compensator (STATCOM)" Systemen, mit denen Blindleistung zwischen dem STATCOM und dem Netz ausgetauscht werden kann. Hierfür werden die drei Phasen in einer Dreieckschaltung zusammengeschlossen.

Ein Modularer Multi-Level-Umrichter mit einer Vielzahl von Modulen ist aus der Druckschrift EP 1497911 B1 bekannt.

Aus der Druckschrift US8766570B2 ist es bekannt, vorher festgelegte Schaltsequenzen für Halbleiterkomponenten eines Umrichters zu ändern. Dabei werden in Abhängigkeit von einem Betriebszustand eines durch den Umrichter versorgten elektrischen Systems wie z.B. eines Motors oder eines Energienetzes harmonische Fehler in der Ausgangsspannung des Umrichters verringert. Es werden vorher definierte Schaltsequenzen eingesetzt.

Aus dem Artikel "Tolerance Band Modulation Methods for Modular Multilevel Converters" von A. Hassanpoor et al., EPE Konferenz, Frankreich 03.09.2013, ist es bekannt, einen Multilevel-Konverter derart zu betreiben, dass die Schaltfrequenz des Umrichters durch Zulassen einer vergleichsweise größeren Abweichung zwischen der Ausgangsspannung des Umrichters und dem theoretischen Idealverlauf einer Wechselspannung herabgesetzt werden kann. Durch die zugelassene Abweichung ergibt sich ein festes Toleranzband, woraus sich eine entsprechende Vorgabe für eine Schaltfrequenz ergibt.

Ausgehend vom bekannten Verfahren nach Hassanpoor stellt sich an die Erfindung die Aufgabe, ein Verfahren anzugeben, mit dem dynamisch der Betrieb des Umrichters auf die jeweilige Betriebssituation angepasst werden kann.

Die Erfindung löst diese Aufgabe durch ein Verfahren gemäß Anspruch 1.

Die Schaltfrequenz ist dabei eine über einen Zeitraum gemittelte Schaltfrequenz aller Submodule in einem Modul des Modularen Multi-Level Umrichters.

Die Halbleiterschalter können z.B. IGBT-Module, PP-IGBT, IGCT, usw. sein.

Im Unterschied zu bekannten Verfahren wird erfindungsgemäß die Schaltfrequenz dynamisch angepasst, um einen Betriebsaspekt zu optimieren. Dies ist ein Vorteil, weil dadurch der Betrieb des Umrichters auf unterschiedlichste Betriebssituationen angepasst werden kann.

In einer bevorzugten Ausführungsform des erfindungsgemäßen Verfahrens werden im Umrichter Module verwendet, denen die Submodule zugeordnet sind, wobei für jedes Modul unabhängig von den anderen Modulen jeweils eine Schaltfrequenz festgelegt wird. Dies ist ein Vorteil, weil so für jedes Modul eine besonders geeignete Einstellung für die Optimierung des Betriebsaspekts erreicht werden kann. Beispielsweise kann eine energiesparende Schaltfrequenz gewählt werden kann. Hierdurch wird in der Zusammenschau aller Module ein optimaler und energieverlustminimierender Betrieb sicher gestellt.

In einer bevorzugten Ausführungsform des erfindungsgemäßen Verfahrens werden zwei Module je Phase einer Wechselspannungsseite des Umrichters eingesetzt, wobei jedes Modul Submodule aufweist. Diese Bauform ist bei Modularen Multi-Level-Umrichtern lange erprobt und ermöglicht einen vielseitigen Einsatz.

In einer weiteren bevorzugten Ausführungsform des erfindungsgemäßen Verfahrens wird zur Steuerung jeweils eine Steuereinrichtung eines jeweiligen Moduls verwendet, so dass für jedes Modul unabhängig von den anderen Modulen jeweils eine Schaltfrequenz festgelegt wird. Dies ist ein Vorteil, weil so für jedes Modul eine besonders energiesparende Schaltfrequenz gewählt werden kann. Hierdurch wird in der Zusammenschau aller Module ein optimaler und energieverlustminimierender Betrieb sicher gestellt.

In einer anderen bevorzugten Ausführungsform des erfindungsgemäßen Verfahrens wird zur Steuerung aller Module eine Steuereinrichtung verwendet, mittels derer für jedes Modul unabhängig von den anderen Modulen jeweils eine Schaltfrequenz festgelegt wird. Dies ist ein Vorteil, weil eine gemeinsame Steuereinrichtung für alle Module z.B. als eine einzige Rechnereinrichtung ausgebildet werden kann, was platz- und kostensparend ist.

In einer weiteren bevorzugten Ausführungsform des erfindungsgemäßen Verfahrens wird der Betriebszustand unter Berücksichtigung mindestens eines der folgenden Betriebsparameter ermittelt: Betriebspunkt des Umrichters; Spannung, Strom oder Leistung an einem Eingang oder an einem Ausgang des Umrichters, Sperrschichttemperatur der Halbleiterschalter, Lebensdauerprognose der Halbleiterschalter, Power Cycling der Halbleiterschalter.

Der Betriebspunkt ist dabei z.B. eine Betriebssituation unter Volllast, Teillast oder Minimumlast ("no load") des Umrichters.

Es können jedoch auch andere elektrische Parameter aus den Submodulen, Modulen oder dem Umrichter verwendet werden, um den Betriebszustand zu ermitteln.

Auch wirtschaftliche Berechnungen in Bezug auf einen aktuellen Energiepreis bzw. eine Prognose für eine Änderung des Energiepreises können in die Ermittlung des Betriebszustands einbezogen werden.

In einer weiteren bevorzugten Ausführungsform des erfindungsgemäßen Verfahrens werden für Betriebspunkte mit kleineren Strömen als der maximalen Strombelastbarkeit des Umrichters geringere Schaltfrequenzen der Module als bei einer maximalen Strombelastung vorgesehen. Dies ist ein Vorteil, weil hierdurch Schaltverluste vermindert und damit Kosten eingespart werden. Die kleinere Schaltfrequenz kann bei kleineren Strömen deshalb angenommen werden, weil bei kleineren Strömen ein kleinerer Ripple erzeugt wird.

Im Rahmen der vorliegenden Anmeldung wird der Begriff "Ripple" für die Schwankungsbreite von Kondensatorspannungen verwendet, wobei die Differenz zwischen der maximalen Kondensatorspannung und der minimalen Kondensatorspannung gebildet wird. Der Ripple beträgt z.B. bei vier Submodulen mit den Spannungen 1V, 2V, 3V, 4V im Ergebnis 4V - 1V = 3V. Generell gilt für Modulare Multi-Level-Umrichter, dass der Ripple umso kleiner wird, desto größer die Schaltfrequenz ist - was allerdings mit entsprechend größeren Energieverlusten einhergeht. Der Ripple eines Moduls darf einer vorher festgelegte Obergrenze nicht überschreiten, um die Betriebssicherheit des Umrichters zu gewährleisten.

In einer weiteren bevorzugten Ausführungsform des erfindungsgemäßen Verfahrens werden als Betriebsaspekt Energieverluste durch Schaltvorgänge der Halbleiterschalter verwendet, die mittels der Festlegung der Schaltfrequenz verringert werden. Dies ist ein Vorteil, weil Kosten eingespart und die Umwelt geschont werden.

In einer weiteren bevorzugten Ausführungsform des erfindungsgemäßen Verfahrens werden als Betriebsaspekt eine Betriebslebensdauer und/oder ein Wartungsaufwand für den Umrichter verwendet, so dass die Betriebslebensdauer verlängert und/oder der Wartungsaufwand verringert wird. Dies ist ein Vorteil, weil so Wartungs- und Instandhaltungsaufwände verringert und Kosten eingespart werden können.

In einer weiteren bevorzugten Ausführungsform des erfindungsgemäßen Verfahrens wird für jedes Modul unter Berücksichtigung des Betriebszustands ein zulässiger modulspezifischer Varianzbereich für eine Abweichung zwischen der Ausgangsspannung des Moduls und der theoretisch auszugebenden Wechselspannung ermittelt, anhand dessen die Schaltfrequenz für das jeweilige Modul festgelegt wird.

Im Rahmen der vorliegenden Anmeldung wird der Begriff Varianzbereich für einen zulässigen Bereich einer Abweichung $\Phi$ zwischen der theoretisch gewünschten Wechselspannung *Usoll* und der Ausgabespannung *Uist* eines Moduls des Umrichters verwendet. Der Varianzbereich hat eine obere Varianzbereichsgrenze $\Phi_{max}$ und eine untere Varianzbereichsgrenze $\Phi_{min}$, so dass sich ein Varianzbereich $\Phi_{min} .. \Phi_{max}$ ergibt. Die Abweichung $\Phi$ ergibt sich aus einem Fehlerintegral $\Phi (t) = \int (Usoll - Uist) dt$. Der Varianzbereich muss nicht symmetrisch sein, sondern kann auch eine unsymmetrische Form haben. So kann z.B. die untere Grenze mit einer größeren Abweichung von der theoretisch gewünschten Wechselspannung festgelegt werden als die obere Grenze, um einen größeren negativen Fehler zu erlauben. Umgekehrt kann auch die obere Grenze entsprechend anders gewählt werden. Es können somit jeweils die Ein- und/oder Ausschaltzeitpunkte der Halbleiterschalter variiert werden.

Die Erfindung beruht darauf, dass die Schaltfrequenz in Abhängigkeit z.B. vom Betriebspunkt variiert wird. Damit können bei Betriebspunkten mit kleineren Strömen, also in einem Teillastbereich, die Schaltfrequenz und somit auch die Schaltverluste verringert werden. Das erlaubt eine optimale Wahl der Schaltfrequenz für den jeweiligen Betriebspunkt, sodass die Energieverluste des Umrichters minimiert werden. Die deutliche Reduktion der Verluste im Teillastbetrieb hat eine positive Auswirkung auf die wirtschaftliche Verlustbewertung der Anlage. Modellrechnungen zeigen, dass die Schaltverluste im Vergleich zu bisherigen Verfahren im Teillastbereich um bis zu 75% reduziert werden können.

In einer Fortbildung des erfindungsgemäßen Verfahrens kann der Varianzbereich und damit schlussendlich die Schaltfrequenz in Abhängigkeit von einer thermischen Belastung der Module, d.h. in Abhängigkeit von einer Sperrschichttemperatur bzw. eines thermischen Modells der Sperrschichttemperatur, verändert werden.

Auch eine tageszeitabhängige Regelung der Umrichterverluste ist sinnvoll: für bestimmte Zeiten, wenn z.B. Verluste besonders teuer sind, kann der Varianzbereich vergrößert (und damit die Schaltfrequenz verkleinert) werden. Weiterhin kann auch der Zustand des Wechselspannungsnetzes oder eine Lastabhängigkeit des Netzbetriebes in die Regelung einbezogen werden.

Jedoch können auch andere Betriebsaspekte optimiert werden, wobei entsprechend wirtschaftliche und/oder elektrotechnische Betriebsparameter ausgewertet werden können.

In einer weiteren bevorzugten Ausführungsform des erfindungsgemäßen Verfahrens für wird jedes Modul der Betriebszustand anhand eines Betriebspunkts, der eine gemessenen Stromstärke berücksichtigt, bestimmt, und eine Schaltfrequenz anhand einer vorher festgelegten Stromstärke-Schaltfrequenz-Kennlinie festgelegt wird.

Die Kennlinie kann dabei theoretisch durch Simulationen und/oder Berechnungen ermittelt oder mittels empirischer Messungen an einem Umrichter unter realitätsnahen Bedingungen festgelegt worden sein.

Die Kennlinie hat z.B. als Eingang bzw. gemessene Stromstärke z.B. einen Modulstrom, einen Transformator-Primärstrom oder einen Transformator-Sekundärstrom. Dabei kann ein Momentanwert der Stromstärke oder ein gemittelter Wert wie etwa ein RMS-Wert verwendet werden.

Der Verlauf der Kennlinie wird maßgeblich von den jeweiligen Ripple-Spannungswerten des Moduls bestimmt.

Es ist ein Vorteil dieser Variante, dass durch die dynamische Regelung der Schaltfrequenz stets ein optimal energiesparender Betrieb des Umrichters ermöglicht wird.

Hierbei wird ein Regelkreis zur Überwachung der Kondensatorspannungen der Submodule im Modul vorgesehen, der einer Schaltfrequenzregelung unter- oder überlagert sein kann. Als Ripple kann z.B. eine Differenz zwischen der zum Zeitpunkt t maximalen und minimalen Kondensatorspannungen in einem Zweig verwendet werden.

Alternativ kann auch ein Mittelwert aller im Zweig verfügbaren Kondensatorspannungen gebildet werden. Es kann z.B. ein positiver Ripple definiert werden, der die Abweichung der aktuell maximalen Kondensatorspannung vom Mittelwert angibt. Entsprechend kann ein negativer Ripple definiert werden, der eine Differenz zwischen Mittelwert und minimaler Kondensatorspannung im Zweig angibt.

In einer weiteren bevorzugten Ausführungsform des erfindungsgemäßen Verfahrens wird für jedes Modul der Varianzbereich anhand einer Schwankungsbreite von Kondensatorspannungen der Submodule des jeweiligen Moduls ermittelt.

Die Schwankungsbreite (Ripple) darf sich nur innerhalb definierter Grenzen bewegen, sodass in Betriebspunkten mit hohen Strömen eine Absenkung der Schaltfrequenz und damit eine Reduzierung der Schaltverluste nicht oder nur in begrenztem Maße möglich ist. Die minimale Schaltfrequenz ist dann durch das Anlagendesign im maximalen Betriebspunkt definiert. Im Teillastbereich ist der Ripple der Kondensatorspannungen bedingt durch die geringeren Betriebsströme kleiner, sodass auch eine geringere Schaltfrequenz möglich wäre. Bei langsamem Schalten vergrößert sich der Ripple, weil die Kondensatoren dann länger auf- bzw. entladen werden. Durch die feste, gemäß dem Stand der Technik unnötig zu hoch gewählte Schaltfrequenzvorgabe werden in diesen Betriebspunkten jedoch unnötige Schaltverluste erzeugt, was nachteilig für die Verlustbewertung ist.

In einer weiteren bevorzugten Ausführungsform des erfindungsgemäßen Verfahrens wird sowohl eine vorher festgelegte Kennlinie als auch eine zulässige modulspezifische Schwankungsbreite der Submodule verwendet, um die Schaltfrequenz zu bestimmen.

Weil sowohl die vorher festgelegte Kennlinie als auch die dynamische Regelung über Messung des Ripple jeweils den Ripple berücksichtigen, sollten sich im Ergebnis für den gleichen Betriebspunkt ähnliche Schaltfrequenzen ergeben. Beide Verfahren gleichzeitig anzuwenden schafft eine Redundanz, die die Verfügbarkeit und Betriebssicherheit weiter erhöht.

In einer weiteren bevorzugten Ausführungsform des erfindungsgemäßen Verfahrens wird je Submodul jeweils eine Halbbrückenschaltung mit zwei Halbleiterschaltern und zwei Dioden verwendet, wobei eine Diode jeweils parallel zu einem Halbleiterschalter geschaltet ist, und es wird ein Energiespeicher verwendet. Dies ist ein Vorteil, weil diese Bauweise lange erprobt ist.

In einer anderen bevorzugten Ausführungsform des erfindungsgemäßen Verfahrens wird je Submodul jeweils eine Vollbrückenschaltung eingesetzt.

In einer weiteren bevorzugten Ausführungsform des erfindungsgemäßen Verfahrens wird als Energiespeicher ein Kondensator verwendet. Dies ist ein Vorteil, weil Kondensatoren schnell entladen und geladen werden können.

Ausgehend von einer bekannten Steuereinrichtung für einen Modularen Multi-Level-Umrichter stellt weiterhin sich an die Erfindung die Aufgabe, eine Steuereinrichtung anzugeben, mit der dynamisch der Betrieb des Umrichters auf die jeweilige Betriebssituation angepasst werden kann.

Die Erfindung löst diese Aufgabe durch eine Steuereinrichtung gemäß Anspruch 6. Bevorzugte Ausführungsformen ergeben sich aus den abhängigen Ansprüchen 7-10. Es ergeben sich für die erfindungsgemäße Steuereinrichtung und ihre Ausführungsformen jeweils sinngemäß die gleichen Vorteile wie eingangs für das erfindungsgemäße Verfahren erläutert.

Ferner stellt sich ausgehend von einem bekannten Modularer Multi-Level-Umrichter an die Erfindung die Aufgabe, einen Modularen Multi-Level-Umrichter anzugeben, dessen Betrieb dynamisch auf die jeweilige Betriebssituation angepasst werden kann.

Die Erfindung löst diese Aufgabe durch einen Modularen Multi-Level-Umrichter gemäß Anspruch 11. Es ergeben sich sinngemäß die gleichen Vorteile wie eingangs für das erfindungsgemäße Verfahren erläutert.

Zur weiteren Erläuterung der Erfindung zeigen in schematischer Darstellung die

Figur 1    eine Schaltfrequenz-Regelung eines Modularen Multi-Level-Umrichters, und

Figur 2    einen Modularen Multi-Level-Umrichter mit sechs Modulen, und

Figur 3    ein Modul, und

Figur 4    ein Submodul in Halbbrückenschaltung, und

Figur 5    einen Spannungsverlauf für eine Ausgangsspannung eines Umrichter-Moduls, und

Figur 6    einen zeitlichen Verlauf des Fehlerintegrals und des Varianzbereichs in einem Modul, und

Figur 7    ein erstes Ausführungsbeispiel einer erfindungsgemäßen Regelung, und

Figur 8    ein zweites Ausführungsbeispiel einer erfindungsgemäßen Regelung, und

Tabelle 1    eine Modellberechnung möglicher Einsparungen durch das erfindungsgemäße Verfahren für ein HCDC-System.

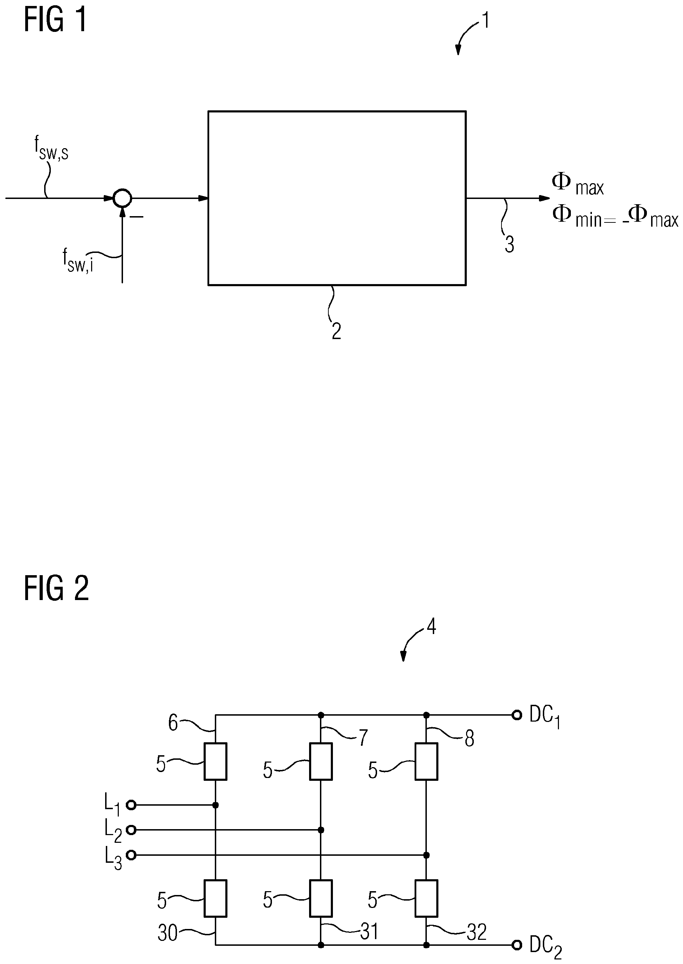

Die Figur 1 zeigt eine Regelung eines Modularen Multi-Level-Umrichters, bei der eine feste Schaltfrequenz für ein Modul $f_{sw,\,s}$ als Sollwert vorgegeben ist. Die Regelung erfolgt für jedes Modul separat in einer dem jeweiligen Modul zugeordneten Steuereinrichtung. Es wird der Sollwert $f_{sw,\,s}$ mit einem Ist-Wert $f_{sw,\,i}$ verglichen und mittels eines Schaltfrequenzreglers 2 eine obere Varianzbereichsgrenze $\Phi_{max}$ und eine untere Varianzbereichsgrenze $\Phi_{min}$ festgelegt, so dass sich ein Varianzbereich $\Phi_{min}$ .. $\Phi_{max}$ ergibt. Mittels des Varianzbereichs wird dann die Schaltfrequenz eingestellt.
Die Abweichung $\Phi$ ergibt aus einem Fehlerintegral $\Phi$ (t) $=\int$(*Usoll - Uist*)dt. Der Varianzbereich ist in diesem Beispiel symmetrisch angelegt, d.h. es gilt:

$$\Phi_{min} \; = \; - \; \Phi_{max}.$$

Der Schaltfrequenz-Sollwert wird einmalig festgelegt und ist dann für alle Betriebspunkte der Anlage fest vorgegeben. Über den Schaltfrequenzregler wird der Varianzbereich des Modulators und somit die Schalthäufigkeit innerhalb einer Netzperiode beeinflusst.
In diversen Veröffentlichungen werden Varianzbereich- (oder "Hystereseband")-Modulationen beschrieben, allerdings immer mit festen Varianzbändern. Sowohl durch Vorgabe eines Schaltfrequenzsollwerts als auch durch Vorgabe eines festen Varianzbands können Schaltverluste in den unterschiedlichen Betriebspunkten nicht unabhängig voneinander beeinflusst werden. Dadurch wird die minimale Schaltfrequenz durch den maximalen Strom definiert.
Die Figur 2 zeigt einen Modularen Multi-Level-Umrichter mit sechs Modulen 5, die in sechs Zweigen 6,7,8,30,31,32 angeordnet sind. An der Wechselspannungsseite sind drei Phasen L1,L2,L3 an jeweils zwei Zweige angeschlossen. An der Gleichspannungsseite liegt eine Gleichspannung zwischen den Anschlüssen $DC_1$ und $DC_2$ an. Die Module können je nach Anwendung jedoch auch als Sternschaltung, Delta-Schaltung oder Hexverter angeordnet werden. Eine Hexverter-Schaltung ist beispielsweise bekannt aus dem Konferenzbeitrag "Survey on the Hexverter topology - A modular multilevel AC/AC converter", Power Electronics and ECCE Asia (ICPE-ECCE Asia), 1-5 June 2015, Seiten 1075-1082 , DOI 10.1109/ICPE.2015.7167914.

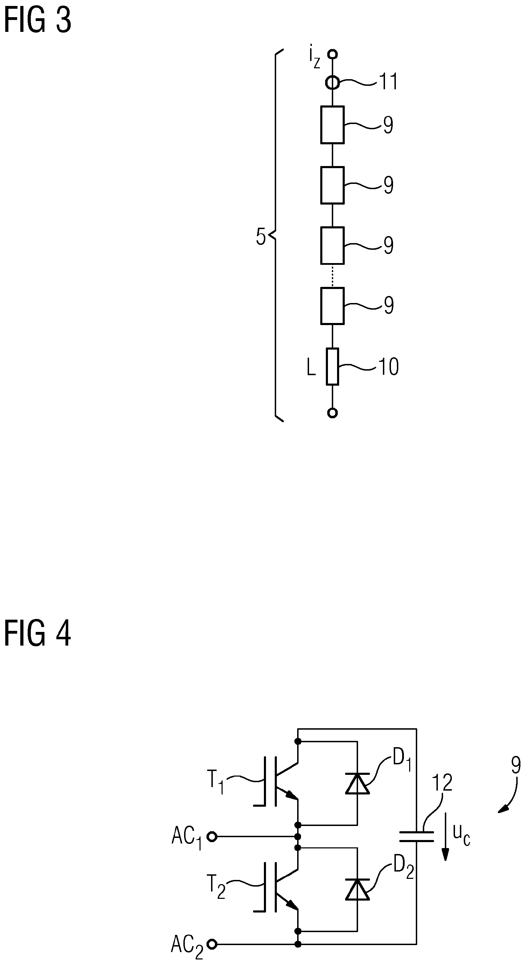

In der Figur 3 ist der Aufbau eines Moduls als Reihenschaltung von Submodulen 9 und einer Zweiginduktivität L dargestellt. An der Messstelle 11 wird ein durch das Modul fließender Strom $i_z$ gemessen.
Figur 4 zeigt ein Beispiel für einen Aufbau eines Submoduls 9 in Halbbrückenschaltung, bei dem zwei Anschlüsse $AC_1$ und $AC_2$ vorgesehen sind. Das Submodul weist zwei Halbleiterschalter $T_1$, $T_2$ auf, denen jeweils eine Diode $D_1$, $D_2$ parallel geschaltet ist. Ein Kondensator 12 dient als Energiespeicher und weist die Spannung $u_c$ auf. Je nach Zustand (offen/geschlossen) der beiden Halbleiterschalter $T_1$,$T_2$ gibt das Submodul die Spannung 0 V (bypass) oder $u_c$ ab. Die Steuerung der Halbleiterschalter $T_1$,$T_2$ des Submoduls erfolgt mittels einer nicht dargestellten Steuereinrichtung des Moduls, in dem das Submodul angeordnet ist. Die Submodule können je nach Anwendung jedoch auch als Vollbrücke, Clamp double Submodul (CDSM) oder Clamp double Submodul two (CSMII) ausgebildet werden.

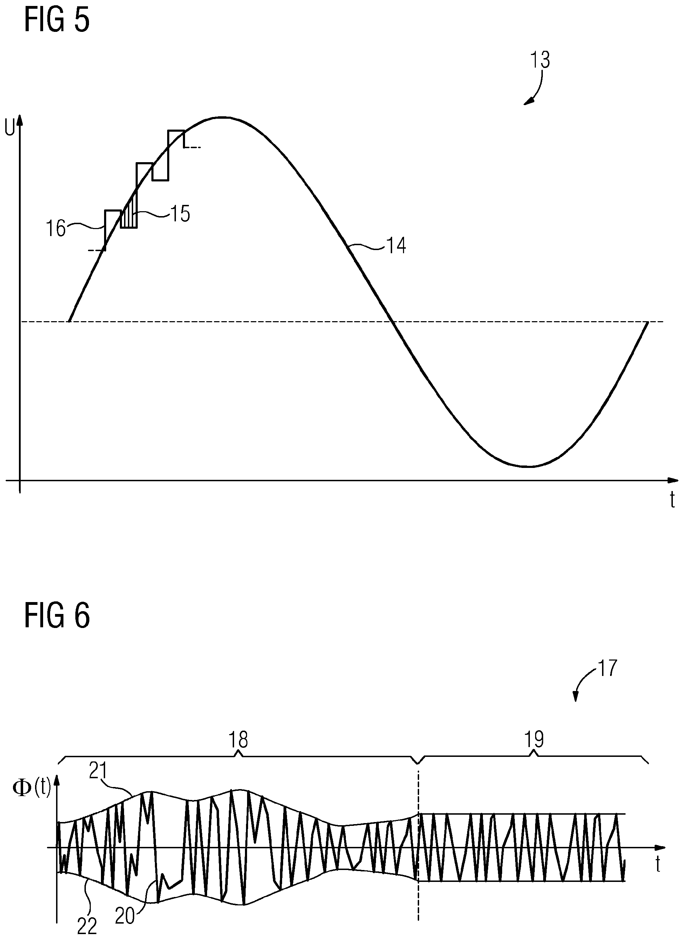

Die Figur 5 zeigt in einem Spannungs-Zeit-Diagramm 13 einen Spannungsverlauf 16 für eine Ausgangsspannung U eines Moduls des Umrichters nach der Zeit t. Sind alle Submodule des Moduls eingeschaltet, ergibt sich die maximale Amplitude der Wechselspannung. Es ist zum Vergleich eine sinusförmige Wechselspannung 14 dargestellt, die mittels des Moduls erzeugt werden soll. Da die Ausgangsspannung 16 aufgrund der Schaltung der Submodule Stufen aufweist, ergibt sich jeweils eine Abweichung 15 gemäß der Gleichung

$$\Phi(\mathrm{t}) = \int (Usoll - Uist)\mathrm{dt}\,.$$

Diese Abweichung darf nur innerhalb eines Varianzbereichs $\Phi_{min}$ bis $\Phi_{max}$ liegen, um einen sicheren Betrieb des Moduls zu gewährleisten. Je enger der Varianzbereich ist, desto häufiger muss geschaltet werden, was einen geringeren Ripple im Modul bewirkt.

Figur 6 zeigt einen zeitlichen Verlauf 17 der Abweichung 20. Links im Bereich 18 ist beispielhaft ein erfindungsgemäß dynamisch angepasster Varianzbereich mit einer oberen Kennlinie 21 für eine obere Varianzbereichsgrenze und mit einer unteren Kennlinie 22 für eine untere Varianzbereichsgrenze eingezeichnet, während rechts im Bereich 19 ein konstanter Varianzbereich vorgegeben ist - wie es bisher im Stand der Technik üblich ist.

Schwankt die Abweichung 20 im linken Bereich 18 zwischen der Kennline 21 und der Kennline 22 als Funktion der Modulstromstärke $i_z$, so kann erfindungsgemäß in jenen Bereichen, in denen eine große Varianz bzw. große Schwankung zugelassen wird, eine Absenkung der Schaltfrequenz des Moduls vorgenommen werden, um erfindungsgemäß Energieverluste zu vermindern. Im Beispiel ist ein gegenüber Null symmetrischer Varianzbereich dargestellt, also $\Phi_{min} = -\Phi_{max}$.

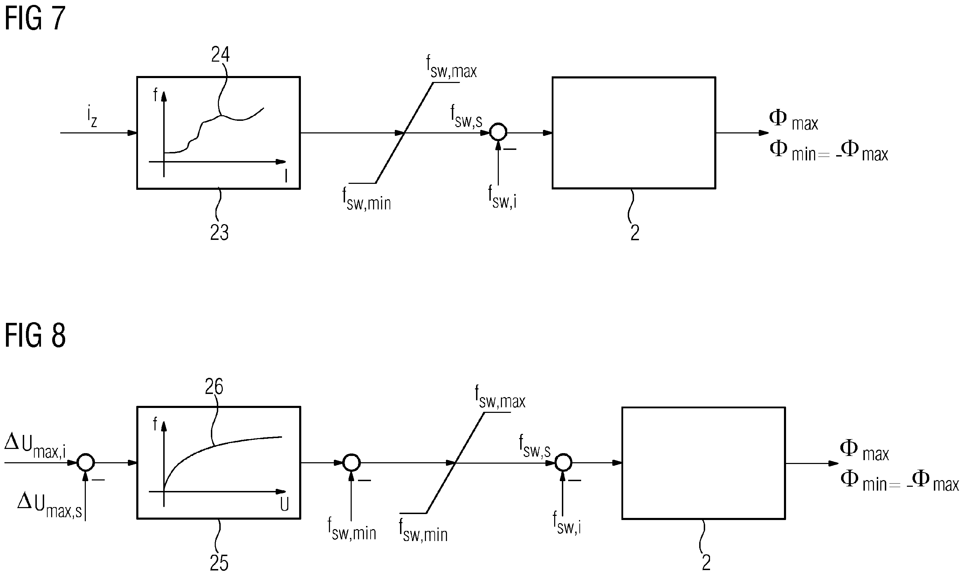

In der Figur 7 ein erstes Ausführungsbeispiel einer erfindungsgemäßen Regelung dargestellt. Die Modulstromstärke $i_z$ dient als Eingangsgröße für einen Schaltfrequenzfinder 23, der aus einer Stromstärke-Frequenz-Kennline 24 eine Schaltfrequenz f ermittelt. Die Stromstärke-Frequenz-Kennline 24 kann empirisch durch Messungen oder durch Simulationen mittels eines Modells festgelegt werden. Möglich ist auch die Berechnung mittels eines Auslegungstools für modulare Multi-Level-Umrichter.

Die vom Schaltfrequenzfinder 23 ermittelte Schaltfrequenz wird in einem weiteren Schritt dahingehend überprüft, ob sie in einem erlaubten Frequenzbereich zwischen $f_{sw,min}$ bis $f_{sw,max}$ liegt und ggf. auf die obere oder untere Grenze abgeregelt.

Als Ausgabegröße nach Einsatz eines Schaltfrequenzreglers 2 ergibt sich ein dynamisch an die Modulstromstärke angepasster zulässiger Varianzbereich.

Der Sollwert für die Schaltfrequenzregelung ist nun nicht mehr ein fest vorgegebener Wert für alle Betriebspunkte, sondern kann auf unterschiedlichste Art und Weise verändert und auf den gerade beim Umrichter vorliegenden Betriebspunkt angepasst werden. Es besteht die Möglichkeit, durch eine Kennlinie, welche die Abhängigkeit zwischen aktueller Stromamplitude und gewünschter Schaltfrequenz charakterisiert, den Sollwert der Schaltfrequenz einzustellen.

Figur 8 zeigt ein zweites Ausführungsbeispiel einer erfindungsgemäßen Regelung, bei der dynamisch im Betrieb des Umrichters anhand einer gemessenen Schwankungsbreite der Kondensatorspannungen $\Delta U_{max,\,ist}$ (maximaler Ripple im Modul) ein Vergleich mit einer maximal zulässigen Schwankungsbreite $\Delta U_{max,\,soll}$ durchgeführt wird. Überschreitet der gemessene Ripple diese Obergrenze, so wird mittels eines Schaltfrequenzfinders 25 anhand des Ripple eine geeignete Schaltfrequenz f berechnet, um die zulässige Obergrenze $\Delta U_{max,\,soll}$ wieder zu unterschreiten.

Mit der nun so gefundenen Schaltfrequenz wird weiter wie in Figur 1 und Figur 7 beschrieben verfahren, um einen Varianzbereich $\Phi_{min} .. \Phi_{max}$ zu ermitteln.

Bei dieser Variante ist also, mit anderen Worten, eine dem Schaltfrequenzregler 2 überlagerte Regelungsschleife vorgesehen, welche den Ripple der Kondensatorspannung überwacht und damit bei kleineren Strömen eine kleinere Schaltfrequenz zulässt.

Ebenso ist es möglich, die Schaltfrequenz f und den Varianzbereich durch eine übergeordnete Systemsteuerung von anderen Faktoren abhängig zu machen. Beispielsweise kann zu einer bestimmten Tageszeit, wenn Verluste besonders teuer sind, die Schaltfrequenz f so angepasst werden, dass möglichst wenig geschaltet wird.

Wird das erfindungsgemäße Verfahren eingesetzt, so ergeben sich große wirtschaftliche Einsparmöglichkeiten. Tabelle 1 zeigt ein Anwendungsbeispiel für die HGÜ-Übertragung mittels einer Simulationsrechnung. Ein Kabel bzw. ein angeschlossener Umrichter haben in ca. 68% aller Zeitpunkte eines Jahres eine Auslastung von 100%. Wird eine erfindungsgemäße Kennlinie eingesetzt und eine bisher übliche Schaltfrequenz als 100 % angesetzt, so könnte mittels des erfindungsgemäßen Verfahrens die Schaltfrequenz auf 80 % verringert werden. Es ergeben sich hierdurch signifikante Einsparungen durch eingesparte Umrichterverluste. Entsprechend ergeben sich für geringe Auslastungen an anderen Betriebspunkten, z.B. zw. 0 und 40 % Auslastung durchweg mehr als 75 % Einsparungen durch das erfindungsgemäße Verfahren.

| Auslastung | Häufigkeit | Schaltfrequenz angepasst nach Kennlinie | Verlustreduktion |
|---|---|---|---|
| % | % | % | % |
| 100 | 68 | 80 | 15,0 |
| 90 | 1 | 73 | 15,3 |
| 80 | 17,5 | 70 | 23,4 |
| 70 | 0,5 | 63 | 24,3 |
| 60 | 0,4 | 57 | 37,5 |
| 50 | 5,9 | 50 | 59,4 |
| 40 | 1,7 | 43 | 75,5 |
| 30 | 0,8 | 37 | 70,8 |
| 20 | 0,1 | 33 | 73,4 |
| 10 | 0,3 | 33 | 72,4 |
| 0 | 3,8 | 33 | 75,5 |

## Patentansprüche

1. Verfahren zur Steuerung eines Modularen Multi-Level-Umrichters (4) mit Submodulen (9), wobei jedes Submodul (9) Halbleiterschalter ($T_1$,$T_2$) aufweist, bei dem
die Halbleiterschalter ($T_1$,$T_2$) mit einer Schaltfrequenz (f) angesteuert werden, um als Ausgabespannung des Umrichters (4) eine Wechselspannung (16) bereit zu stellen,
**dadurch gekennzeichnet, dass**
ein Betriebszustand des Umrichters (4) ermittelt wird und dass die Schaltfrequenz (f) der Halbleiterschalter ($T_1$,$T_2$) in Abhängigkeit vom Betriebszustand festgelegt wird, so dass ein Betriebsaspekt des Umrichters (4) optimiert wird,

- wobei der Betriebszustand unter Berücksichtigung mindestens eines der folgenden Betriebsparameter ermittelt wird: Betriebspunkt des Umrichters (4), Spannung, Strom oder Leistung an einem Eingang oder an einem Ausgang des Umrichters (4), Sperrschichttemperatur der Halbleiterschalter ($T_1$,$T_2$), Lebensdauerprognose der Halbleiterschalter ($T_1$,$T_2$), Power Cycling der Halbleiterschalter ($T_1$,$T_2$),
- wobei als Betriebsaspekt Energieverluste durch Schaltvorgänge der Halbleiterschalter ($T_1$,$T_2$) verwendet werden, die mittels der Festlegung der Schaltfrequenz (f) verringert werden, und/oder als Betriebsaspekt eine Betriebslebensdauer verwendet wird, so dass die Betriebslebensdauer verlängert wird, und/oder als Betriebsaspekt ein Wartungsaufwand für den Umrichter (4) verwendet wird, so dass der Wartungsaufwand verringert wird, und
- wobei im Umrichter (4) Module (5) verwendet werden, denen die Submodule (9) zugeordnet sind, wobei für jedes Modul (5) unabhängig von den anderen Modulen (5) jeweils eine Schaltfrequenz (f) festgelegt wird.

2. Verfahren nach Anspruch 1, **dadurch gekennzeichnet, dass** für Betriebspunkte mit kleineren Strömen (I) als der maximalen Strombelastbarkeit des Umrichters (4) geringere Schaltfrequenzen (f) der Module als bei einer maximalen Strombelastung vorgesehen werden.

3. Verfahren nach einem der vorhergehenden Ansprüche, **dadurch gekennzeichnet, dass** für jedes Modul (5) unter Berücksichtigung des Betriebszustands ein zulässiger modulspezifischer Varianzbereich ($\Phi_{min}$..$\Phi_{max}$) für eine Abweichung ($\Phi$(t)) zwischen der Ausgangsspannung des Moduls und der theoretisch auszugebenden Wechselspannung ermittelt wird, anhand dessen die Schaltfrequenz (f) für das jeweilige Modul (5) festgelegt wird.

4. Verfahren nach Anspruch 3, **dadurch gekennzeichnet, dass** für jedes Modul der Betriebszustand anhand eines Betriebspunkts, der eine gemessenen Stromstärke (I) berücksichtigt, bestimmt wird, und eine Schaltfrequenz (f) anhand einer vorher festgelegten Stromstärke-Schaltfrequenz-Kennlinie (24) festgelegt wird.

5. Verfahren nach Anspruch 3, **dadurch gekennzeichnet, dass** für jedes Modul der Varianzbereich ($\Phi_{min}$..$\Phi_{max}$) anhand einer Schwankungsbreite von Kondensatorspannungen ($U_c$) der Submodule (9) des jeweiligen Moduls (5) ermittelt wird.

6. Steuereinrichtung für einen Modularen Multi-Level-Umrichter (4), die ausgebildet ist, Halbleiterschalter ($T_1$,$T_2$) in Submodulen (9) des Umrichters (4) mit einer Schaltfrequenz (f) anzusteuern, um als Ausgabespannung des Umrichters (4) eine Wechselspannung (16) bereit zu stellen, **dadurch gekennzeichnet, dass** die Steuereinrichtung ausgebildet ist, einen Betriebszustand des Umrichters (4) zu ermitteln und die Schaltfrequenz (f) in Abhängigkeit vom Betriebszustand festzulegen, so dass ein Betriebsaspekt des Umrichters (4) optimiert wird,

- wobei die Steuereinrichtung ausgebildet ist, den Betriebszustand unter Berücksichtigung mindestens eines der folgenden Betriebsparameter zu ermitteln: Betriebspunkt des Umrichters (4); Spannung, Strom oder Leistung an einem Eingang oder an einem Ausgang des Umrichters (4), Sperrschichttemperatur der Halbleiterschalter ($T_1$,$T_2$), Lebensdauerprognose der Halbleiterschalter($T_1$,$T_2$), Power Cycling der Halbleiterschalter ($T_1$,$T_2$),
- wobei die Steuereinrichtung ausgebildet ist, als Betriebsaspekt Energieverluste durch Schaltvorgänge der Halbleiterschalter ($T_1$,$T_2$) zu verwenden, so dass die Energieverluste vermindert werden, und/oder als Betriebsaspekt eine Betriebslebensdauer zu verwenden, so dass die Betriebslebensdauer verlängert wird, und/oder als Betriebsaspekt einen Wartungsaufwand für den Umrichter (4) zu verwenden, so dass der Wartungsaufwand verringert wird, und
- wobei die Steuereinrichtung ausgebildet ist, für ein Modul des Umrichters, dem Submodule (9) zugeordnet sind, unabhängig von anderen derartigen Modulen (5) des Umrichters jeweils die Schaltfrequenz (f) festzulegen.

7. Steuereinrichtung nach Anspruch 6, **dadurch gekennzeichnet, dass** die Steuereinrichtung ausgebildet ist, für Betriebspunkte mit kleineren Strömen als der maximalen Strombelastbarkeit des Umrichters geringere Schaltfrequenzen (4) der Module (5) als bei einer maximalen Strombelastung vorzusehen.

8. Steuereinrichtung nach Anspruch 6 oder 7, **dadurch gekennzeichnet, dass** die Steuereinrichtung ausgebildet ist, für jedes Modul (4) unter Berücksichtigung des Betriebszustands einen zulässigen modulspezifischen Varianzbereich ($\Phi_{min}..\Phi_{max}$) für eine Abweichung ($\Phi(t)$) zwischen der Ausgangsspannung des Moduls (5) und der theoretisch auszugebenden Wechselspannung (16) zu ermitteln, anhand dessen die Schaltfrequenz (f) für das jeweilige Modul (5) festgelegt wird.

9. Steuereinrichtung nach einem der Ansprüche 6 bis 8, **dadurch gekennzeichnet, dass** die Steuereinrichtung ausgebildet ist, für jedes Modul (5) den Betriebszustand anhand eines Betriebspunkts, der eine gemessenen Stromstärke (I) berücksichtigt, zu bestimmen, und eine Schaltfrequenz (f) anhand einer vorher festgelegten Stromstärke-Schaltfrequenz-Kennlinie (24) festzulegen.

10. Steuereinrichtung nach einem der Ansprüche 6 bis 9, **dadurch gekennzeichnet, dass** die Steuereinrichtung ausgebildet ist, für jedes Modul (5) den Varianzbereich ($\Phi_{min}..\Phi_{max}$) anhand einer Schwankungsbreite von Kondensatorspannungen ($U_c$) der Submodule (9) des jeweiligen Moduls (4) zu ermitteln.

11. Modularer Multi-Level-Umrichter (4) mit Modulen (5) und Submodulen (9), die Halbleiterschalter ($T_1$,$T_2$) aufweisen, und mit einer Steuereinrichtung nach einem der Ansprüche 6 bis 10.

**Claims**

1. Method for controlling a modular multilevel converter (4) having submodules (9), wherein each submodule (9) has semiconductor switches ($T_1$, $T_2$), in which
the semiconductor switches ($T_1$, $T_2$) are actuated at a switching frequency (f) in order to provide an AC voltage (16) as output voltage of the converter (4),
**characterized in that**
an operating state of the converter (4) is identified and **in that** the switching frequency (f) of the semiconductor switches ($T_1$, $T_2$) is set depending on the operating state so that an operational aspect of the converter (4) is optimized,

- wherein the operating state is identified by taking into account at least one of the following operating parameters: operating point of the converter (4), voltage, current or power at an input or at an output of the converter (4), junction temperature of the semiconductor switches ($T_1$, $T_2$), lifetime forecast of the semiconductor switches ($T_1$, $T_2$), power cycling of the semiconductor switches ($T_1$, $T_2$),
- wherein energy losses owing to switching processes of the semiconductor switches ($T_1$, $T_2$) are used as

operational aspect, said energy losses being reduced by means of setting the switching frequency (f), and/or an operating lifetime is used as operational aspect so that the operating lifetime is extended, and/or a maintenance outlay for the converter (4) is used as operational aspect so that the maintenance outlay is reduced, and

- wherein modules (5), to which the submodules (9) are assigned, are used in the converter (4), wherein a respective switching frequency (f) is set for each module (5) independently of the other modules (5).

2. Method according to Claim 1, **characterized in that** lower switching frequencies (f) of the modules are provided for operating points with lower currents (I) than the maximum current-carrying capacity of the converter (4) than in the case of a maximum current loading.

3. Method according to either of the preceding claims, **characterized in that** a permissible module-specific variance range ($\Phi_{min}$ ... $\Phi_{max}$) for a deviation ($\Phi(t)$) between the output voltage of the module and the AC voltage to be output in theory is identified for each module (5) by taking into account the operating state, the switching frequency (f) for the respective module (5) being set based on said variance range.

4. Method according to Claim 3, **characterized in that** the operating state is determined for each module based on an operating point that takes into account a measured current intensity (I), and a switching frequency (f) is set based on a previously set current intensity/switching frequency characteristic curve (24).

5. Method according to Claim 3, **characterized in that** the variance range ($\Phi_{min}$ ... $\Phi_{max}$) is identified for each module based on a spread of capacitor voltages ($U_c$) of the submodules (9) of the respective module (5).

6. Control device for a modular multilevel converter (4), which is designed to actuate semiconductor switches ($T_1$, $T_2$) in submodules (9) of the converter (4) at a switching frequency (f) in order to provide an AC voltage (16) as output voltage of the converter (4),
**characterized in that** the control device is designed to identify an operating state of the converter (4) and to set the switching frequency (f) depending on the operating state so that an operational aspect of the converter (4) is optimized,

- wherein the control device is designed to identify the operating state by taking into account at least one of the following operating parameters: operating point of the converter (4); voltage, current or power at an input or at an output of the converter (4), junction temperature of the semiconductor switches ($T_1$, $T_2$), lifetime forecast of the semiconductor switches ($T_1$, $T_2$), power cycling of the semiconductor switches ($T_1$, $T_2$),
- wherein the control device is designed to use energy losses owing to switching processes of the semiconductor switches ($T_1$, $T_2$) as operational aspect so that the energy losses are reduced, and/or to use an operating lifetime as operational aspect so that the operating lifetime is extended, and/or to use a maintenance outlay for the converter (4) as operational aspect so that the maintenance outlay is reduced, and
- wherein the control device is designed to set the respective switching frequency (f) for a module of the converter, to which the submodules (9) are assigned, independently of other such modules (5) of the converter.

7. Control device according to Claim 6, **characterized in that** the control device is designed to provide lower switching frequencies (f) of the modules (5) for operating points with lower currents than the maximum current-carrying capacity of the converter than in the case of a maximum current loading.

8. Control device according to Claim 6 or 7, **characterized in that** the control device is designed to identify a permissible module-specific variance range ($\Phi_{min}$ ... $\Phi_{max}$) for a deviation ($\Phi(t)$) between the output voltage of the module (5) and the AC voltage (16) to be output in theory for each module (5) by taking into account the operating state, the switching frequency (f) for the respective module (5) being set based on said variance range.

9. Control device according to one of Claims 6 to 8, **characterized in that** the control device is designed to determine the operating state for each module (5) based on an operating point that takes into account a measured current intensity (I), and to set a switching frequency (f) based on a previously set current intensity/switching frequency characteristic curve (24).

10. Control device according to one of Claims 6 to 9, **characterized in that** the control device is designed to identify the variance range ($\Phi_{min}$ ... $\Phi_{max}$) for each module (5) based on a spread of capacitor voltages ($U_c$) of the submodules (9) of the respective module (5).

**11.** Modular multilevel converter (4) having modules (5) and submodules (9), which have semiconductor switches ($T_1$, $T_2$), and having a control device according to one of Claims 6 to 10.

**Revendications**

**1.** Procédé de commande d'un onduleur (4) modulaire à niveaux multiples, ayant des sous-modules (9), chaque sous-module (9) ayant un interrupteur ($T_1$, $T_2$) à semi-conducteur, dans lequel

on commande les interrupteurs ($T_1$, $T_2$) à semi-conducteur à une fréquence (f) de coupure, pour disposer d'une tension (16) alternative comme tension de sortie de l'onduleur (4), **caractérisé en ce que**

l'on détermine un état de fonctionnement de l'onduleur (4) et **en ce que** l'on fixe la fréquence (f) de coupure des interrupteurs ($T_1$, $T_2$) à semi-conducteur en fonction de l'état de fonctionnement, de manière à optimiser un aspect de fonctionnement de l'onduleur (4),

    - dans lequel on détermine l'état de fonction en tenant compte d'au moins l'un des paramètres de fonctionnement suivants : point de fonctionnement de l'onduleur (4), tension, courant ou puissance à une entrée ou à une sortie de l'onduleur (4), température de la couche d'arrêt des interrupteurs ($T_1$, $T_2$) à semi-conducteur, pronostic de durée de vie des interrupteurs ($T_1$, $T_2$) à semi-conducteur, power cycling des interrupteurs ($T_1$, $T_2$) à semi-conducteur,

    - dans lequel on utilise, comme aspect de fonctionnement, des pertes d'énergie par des opérations de coupure des interrupteurs ($T_1$, $T_2$) à semi-conducteur, qui sont diminuées au moyen de la fixation de la fréquence (f) de coupure et/ou on utilise, comme aspect de fonctionnement, une durée de vie de fonctionnement, de manière à prolonger la durée de vie de fonctionnement,

et/ou on utilise, comme aspect de fonctionnement, une dépense d'entretien de l'onduleur (4), de manière à diminuer la dépense d'entretien et

    - dans lequel on utilise dans l'onduleur (4) des modules (5) auxquels les sous-modules (3) sont associés, dans lequel, pour chaque module (5), on fixe, indépendamment des autres modules (5), respectivement, une fréquence (f) de coupure.

**2.** Procédé suivant la revendication 1, **caractérisé en ce que**, pour des points de fonctionnement à courant (I) moins intenses que l'aptitude maximum de l'onduleur (4) à être chargé en courant, on prévoit des fréquences (f) de coupure des modules plus basses que pour une charge maximale de courant.

**3.** Procédé suivant l'une des revendications précédentes, **caractérisé en ce que**, pour chaque module (5), on détermine, en tenant compte de l'état de fonctionnement, une plage ($\phi_{min}..\phi_{max}$) de variance, admissible, spécifique au module, d'un écart ($\phi(t)$) entre la tension de sortie du module et la tension alternative sortant théoriquement, à l'aide de laquelle on fixe la fréquence (f) de coupure du module (5) respectif.

**4.** Procédé suivant la revendication 3, **caractérisé en ce que**, pour chaque module, on détermine l'état de fonctionnement à l'aide d'un point de fonctionnement, qui tient compte d'une intensité (I) mesurée du courant, et on fixe une fréquence (f) de coupure à l'aide d'une courbe (24) caractéristique intensité du courant-fréquence de coupure fixée auparavant.

**5.** Procédé suivant la revendication 3, **caractérisé en ce que**, pour chaque module, on détermine la plage ($\phi_{min}..\phi_{max}$) de variance à l'aide d'une amplitude de fluctuation de tensions ($U_c$) de condensateur des sous-modules (9) du module (5) respectif.

**6.** Dispositif de commande d'un onduleur (4) modulaire à niveaux multiples, qui est constitué pour commandes des interrupteurs ($T_1$, $T_2$) à semi-conducteur des sous-modules (9) du convertisseur (4) à une fréquence (f) de coupure, afin de disposer d'une tension (16) alternative comme tension de sortie de l'onduleur (4), **caractérisé en ce que** le dispositif de commande est constitué pour déterminer un état de fonctionnement de l'onduleur (4) et fixer la fréquence (f) de coupure en fonction de l'état de fonctionnement, de manière à optimiser un aspect de fonctionnement de l'onduleur (4),

    - dans lequel le dispositif de commande est constitué pour déterminer l'état de fonctionnement en tenant compte au moins de l'un des paramètres de fonctionnement suivants : point de fonctionnement de l'onduleur (4), tension, courant ou puissance à une entrée ou à une sortie de l'onduleur (4), température de la couche d'arrêt des interrupteurs ($T_1$, $T_2$) à semi-conducteur, pronostic de durée de vie des interrupteurs ($T_1$, $T_2$) à semi-conducteur,

power cycling des interrupteurs ($T_1$, $T_2$) à semi-conducteur,
- dans lequel le dispositif de commande est constitué pour utiliser, comme aspect de fonctionnement, des pertes d'énergie par des opérations de coupure des interrupteurs ($T_1$, $T_2$) à semi-conducteur, de manière à diminuer les pertes d'énergie et/ou
à utiliser, comme aspect de fonctionnement, une durée de vie de fonctionnement, de manière à prolonger la durée de vie de fonctionnement et/ou à utiliser, comme aspect de fonctionnement, un coût d'entretien de l'onduleur (4), de manière à diminuer le coût de l'entretien et
- dans lequel le dispositif de commande est constitué pour fixer, pour un module de l'onduleur auquel sont associés des sous-modules (9), indépendamment d'autres modules (5) de ce type de l'onduleur, respectivement, la fréquence (f) de coupure.

7.  Dispositif de commande suivant la revendication 6, **caractérisé en ce que** le dispositif de commande est constitué pour prévoir, pour des points de fonctionnement à courant moins intense que la possibilité maximum de charge en courant de l'onduleur, des fréquences (4) de coupure des modules (5) plus basses que pour une charge maximum de courant.

8.  Dispositif de commande suivant la revendication 6 ou 7, **caractérisé en ce que** le dispositif de commande est constitué pour déterminer, pour chaque module (4), en tenant compte de l'état de fonctionnement, une plage ($\phi_{min}..\phi_{max}$) de variance admissible spécifique au module, d'un écart ($\phi(t)$) entre la tension de sortie du module (5) et la tension (16) alternative à sortir théoriquement, à l'aide de laquelle la fréquence (f) de coupure du module (5) respectif est fixée.

9.  Dispositif de commande suivant l'une des revendications 6 à 8, **caractérisé en ce que** le dispositif de commande est constitué pour déterminer, pour chaque module (5), l'état de fonctionnement, à l'aide d'un point de fonctionnement, qui tient compte d'une intensité (I) mesurée du courant, et pour fixer une fréquence (f) de coupure à l'aide d'une courbe (24) caractéristique intensité du courant-fréquence de coupure fixée à l'avance.

10. Dispositif de commande suivant l'une des revendications 6 à 9, **caractérisé en ce que** le dispositif de commande est constitué pour déterminer, pour chaque module (5), la plage ($\phi_{min}..\phi_{max}$) de variance à l'aide d'une amplitude de fluctuation de tensions ($U_c$) de condensateur des sous-modules (9) du module (4) respectif.

11. Onduleur (4) modulaire à niveaux multiples, ayant des modules (5) et des sous-modules (9), qui ont des interrupteurs ($T_1$, $T_2$) à semi-conducteur et comprenant un dispositif de commande suivant l'une des revendications 6 à 10.

# FIG 1

$f_{SW,s}$

$-$

$f_{SW,i}$

1

$\Phi_{max}$

$\Phi_{min} = -\Phi_{max}$

3

2

# FIG 2

4

6

5

7

8

5

5

$L_1$

$L_2$

$L_3$

DC$_1$

5

5

5

30

31

32

DC$_2$

# FIG 3

# FIG 4

## FIG 5

## FIG 6

FIG 7

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1497911 B1

- US 8766570 B2

**In der Beschreibung aufgeführte Nicht-Patentliteratur**

- **A. HASSANPOOR et al.** Tolerance Band Modulation Methods for Modular Multilevel Converters. *EPE Konferenz,* 03. September 2013

- Survey on the Hexverter topology - A modular multilevel AC/AC converter. *Power Electronics and ECCE Asia (ICPE-ECCE Asia),* 01. Juni 2015, 1075-1082